**Europäisches Patentamt**

**European Patent Office**

**Office européen des brevets**

(19)

(11) Veröffentlichungsnummer : **0 134 841**
**B1**

(12) **EUROPÄISCHE PATENTSCHRIFT**

(45) Veröffentlichungstag der Patentschrift :
**19.08.87**

(21) Anmeldenummer : **83112094.4**

(22) Anmeldetag : **01.12.83**

(51) Int. Cl.⁴ : **G 21 C 19/36**, B 23 P 19/02

(54) Druckvorrichtung zum Ausschieben von Brennstäben aus einem Kernreaktor-Brennelement.

(30) Priorität : 02.09.83 DE 3331761

(43) Veröffentlichungstag der Anmeldung :
27.03.85 Patentblatt 85/13

(45) Bekanntmachung des Hinweises auf die Patenterteilung : 19.08.87 Patentblatt 87/34

(84) Benannte Vertragsstaaten :
BE CH DE FR LI SE

(56) Entgegenhaltungen :
EP-A- 0 066 695
DE-A- 2 054 394
US-A- 3 140 238
US-A- 3 501 826
US-A- 3 510 012
PROCEEDINGS OF THE 12th CONFERENCE ON REMOTE SYSTEMS TECHNOLOGY, ANS, 30. November - 3. Dezember 1964, San Francisco, Californien, Seiten 159-165, American Nuclear Society, Inc., Hinsdale, Illinois, US; R.MAS: "ADAC-operation of a fuel-dismantling line in a cell mockup"

(73) Patentinhaber : **Siemens Aktiengesellschaft Berlin und München**
**Wittelsbacherplatz 2**
**D-8000 München 2 (DE)**

(72) Erfinder : **Rohr, Franz**
**Lange Zeile 64**
**D-8520 Erlangen (DE)**

**Beschreibung**

Die Erfindung betrifft eine Druckvorrichtung der im Oberbegriff des Anspruchs 1 näher bezeichneten Art.

In der EP-A-83 10 7568.4 ist eine sogenannte Dichtsetzvorrichtung für abgebrannte Brennstäbe aus Reaktor-Brennelementen beschrieben, die dazu dient, aus einem Reaktor-Brennelement entnommene Brennstäbe in dichtest möglicher, vorzugsweise hexagonal dichtester Packung zusammenzudrükken und in einen Lagerungsbehälter zu überführen. Dazu ist es notwendig, die Brennstäbe mit Hilfe einer Druckvorrichtung aus den Abstandshaltern eines Reaktor-Brennelementes auszuschieben und über ein Führungsmittel, beispielsweise ein Führungsrohrbündel, in die Dichtsetzvorrichtung einzuführen.

Es ist der Zweck der vorliegenden Erfindung, eine Druckvorrichtung dieser Art so zu gestalten, daß es gelingt, möglichst viele, im Extremfall alle Brennstäbe gleichzeitig aus einem Brennelement auszuschieben und über das Führungsrohrbündel in die Dichtsetzvorrichtung einzubringen. Sofern das gleichzeitige Ausschieben aller Brennstäbe auf Schwierigkeiten stößt, soll es möglich sein, die Brennstäbe reihenweise oder gruppenweise auszuschieben.

Nachdem die Brennstäbe während ihrer Arbeitsphase einer relativ hohen thermischen Belastung ausgesetzt sind und auch chemischen Einflüssen unterliegen, kann es vorkommen, daß sich einzelne Brennstäbe in den Abstandshaltern verklemmen. In einem solchen Fall soll die Druckvorrichtung, um größere Schäden zu vermeiden, oberhalb eines bestimmten Druckes insgesamt abgeschaltet werden, mindestens soll aber die Krafteinwirkung auf den betreffenden Brennstab unterbrochen werden.

Der Erfindung liegt die Aufgabe zugrunde, eine Druckvorrichtung der eingangs beschriebenen Art für diese Zwecke so zu gestalten, daß sie unter Berücksichtigung des geometrischen Teilungsmaßes des zu entleerenden Brennelemen- in der Lage ist, eine gewünschte Anzahl von Brennstäben, in Sonderheit alle Brennstäbe gleichzeitig aus der Brennelementhalterung auszuschieben und in ein Führungsmittel zum Zwecke der Einbringung in eine Dichtsetzvorrichtung einzuführen.

Diese Aufgabe wird durch die gemäß Patentanspruch 1 gestaltete Druckvorrichtung gelöst.

Vorteilhafte Weiterbildungen und Ausgestaltungen der Druckvorrichtung nach Patenanspruch 1 sind in den Unteransprüchen gekennzeichnet.

Zwei Ausführungsbeispiele der Erfindung sind anhand von Zeichnungen im folgenden näher erläutert. Es zeigen :

Figur 1 eine Draufsicht auf eine bestimmte Ausführungsform der Druckvorrichtung, von der in

Figur 2 ein Teillängsschnitt in Vorderansicht, in

Figur 3 ein Querschnitt, in

Figur 4 eine Seitenansicht und in

Figur 5 eine Vorderansicht mit zusätzlichen Halterungsmitteln dargestellt ist ;

Figur 6 eine Vorderansicht einer Ausführungsform mit einem anderen Antriebssystem und anderer Druckstangenbefestigung,

Figur 7 eine Draufsicht auf eine weitere Ausführungsform, von der in

Figur 8 ein Teillängsschnitt in Vorderansicht, in

Figur 9 eine Seitenansicht und in

Figur 10 ein Querschnitt gezeigt sind und schließlich

Figur 11 eine Vorderansicht einer gegenüber Fig. 1 modifizierten Ausführungsform, von der in Figur 12 eine Seitenansicht dargestellt ist.

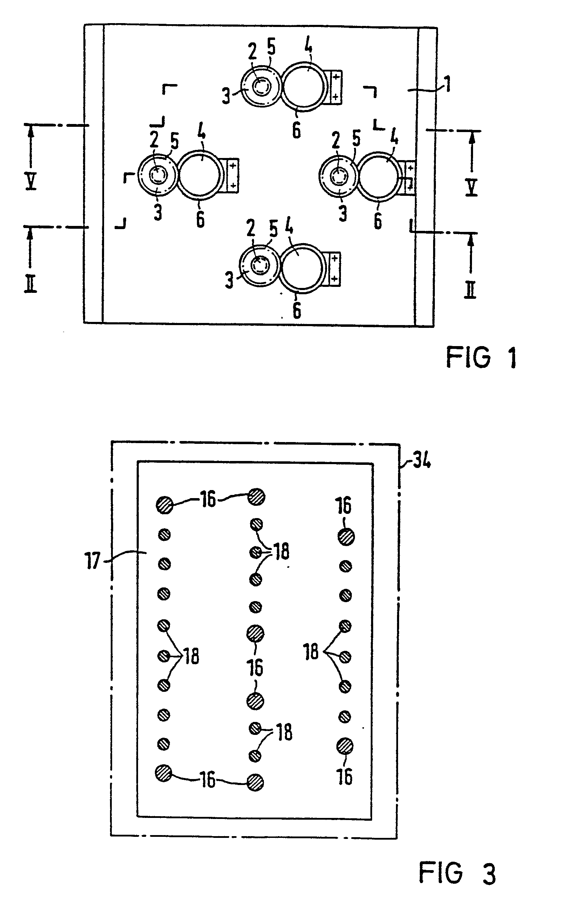

Gemäß Fig. 1 sind auf einer Grundplatte 1 vier gleichartige Gewindespindeln 2 angeordnet, die mit Hilfe von auf der Grundplatte 1 drehbar gelagerten Antriebsmuttern 3 mit Innengewinde, deren äußere Zahnkränze 5 mit den Ritzeln 6 von zugeordneten elektrischen Getriebemotoren 4 in Eingriff sind, betätigt werden, so daß jede Gewindespindel 2 eine Bewegung senkrecht zur Zeichnungsebene ausführen kann.

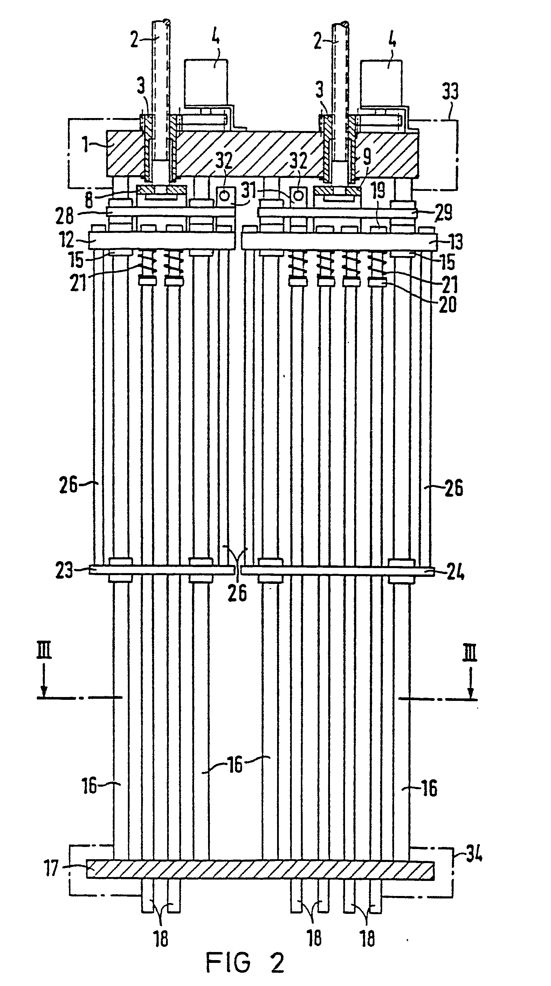

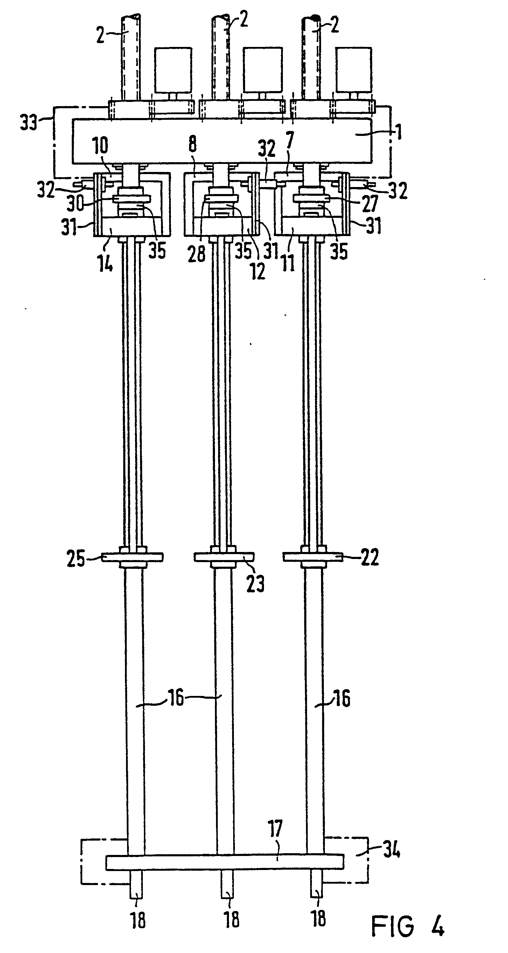

Aus dem in Fig. 2 dargestellten Teillängsschnitt durch die Druckvorrichtung ist in Verbindung mit Fig. 4 zu erkennen, daß die von den drehbar gelagerten Antriebsmuttern 3 axial bewegten Gewindespindeln 2 an Bügeln 7, 8, 9, 10 befestigt sind, die ihrerseits mit Druckleisten 11, 12, 13, 14, fest verbunden sind. Diese Leisten sind in Kugelbüchsen 15 auf Führungsstangen 16 axial verschiebbar gelagert. Die Führungsstangen 16 verbinden die Grundplatte 1 mit einer Führungsplatte 17. Beide befinden sich in einem solchen Abstand voneinander, daß die der Länge der auszuschiebenden Brennstäbe entsprechende Hubbewegung der Druckleisten 11, 12, 13, 14 zwischen beiden Platten ausgeführt werden kann. Zum Ausdrücken der Brennstäbe sind in entsprechender geometrischer Anordnung (Fig. 3) Druckstangen 18 vorhanden, welche an den Druckleisten 11, 12, 13, 14 um einen gewissen Axialhub gegen Federdruck verschiebbar gelagert sind. Zu diesem Zweck besitzen die Druckstangen 18 an ihren oberen Enden Wülste 19 und, im Abstand des gewünschten Axialhubes, gleichartige Wülste 20. Zwischen diesen Wülsten sind die Druckstangen in ensprechenen Bohrungen der Druckleisten gelagert. Zwischen den Druckleisten und den unteren Wülsten 20 befinden sich Schraubenfedern 21 als Druckfedern. An ihrem anderen Ende sind die Druckstangen 18 durch mit denjenigen der entsprechenden Druckleisten 11, 12, 13, 14 deckungsgleiche Bohrungen der Führungsplatte 17 axial verschiebbar gelagert. Der Abstand zwischen den Druckleisten und der Führungsplatte entspricht etwa die Länge der aus dem Reaktor-Brennelement auszuschieben Brennstäbe.

Um ein Durchbiegen der Druckstangen 18 unter Belastung zu vermeiden, sind im Zwischenraum zwischen den Druckleisten 11, 12, 13, 14 und der Führungsplatte 17 Halterungsplatten 22, 23, 24, 25 (Fig. 2 und 4) angeordnet, die mit Hilfe von Schubstangen 26 mit den ihnen zugeordneten Druckleisten 11, 12, 13, 14 verbunden sind. Die Schubstangen 26 sind mit den Halterungsplatten fest und mit den Druckleisten 11, 12, 13, 14 axial gleitend verbunden. Auf diese Weise ist es möglich, die Druckstangen 18 ohne nennenswerten Hubverlust einwandfrei zu führen. Beim Aufsitzen der Halterungsplatten 22, 23, 24, 25 auf der Führungsplatte 17 bleiben die Schubstangen 26 stehen, während sich die Druckleisten 11, 12, 13, 14 weiter nach unten bewegen, so daß in der Endstellung die Druckleisten 11, 12, 13, 14 auf den Halterungsplatten 22, 23, 24, 25 und diese auf der Führungsplatte 17 aufliegen. Oberhalb der Druckleisten 11, 12, 13, 14 sind auf den Führungsstangen 16 in axialer Richtung gleitend gelagerte Schaltleisten 27, 28, 29, 30 angeordnet, die dann in Funktion treten, wenn sich beim Ausdrückvorgang ein Brennstab in den Abstandshaltern des Reaktor-Brennelementes verklemmt, so daß die betreffende Druckstange stehen bleibt. Dabei drückt die ihr zugeordnete Druckleiste (z. B. 12), die Schraubenfeder 21 der stehengebliebenen Druckstange zusammen, wobei die obere Wulst 19 dieser Druckstange zunächst auf die Schaltleiste (z. B. 28) trifft, die dann ebenfalls stehenbleibt. Kurz bevor die Druckleiste 12 die untere Wulst 20 der stehengebliebenen Druckstange erreicht, betätigt die Schaltleiste einen über Abstandshalter 31 an der betreffenden Druckleiste befestigten Näherungsschalter 32, der das Antriebsmittel dieser Druckleiste abschaltet. Der verklemmte Brennstab muß dann mit einem speziellen Ziehwerkzeug entfernt werden.

In Fig. 3 ist eine mögliche Anordnung der Druckstangen im Querschnitt dargestellt. Wie zu erkennen ist, sind die Druckstangen reihenweise im Rastermaß des Brennelementes aber in unterschiedlicher Anzahl pro Reihe angeordnet. Der Grund dafür liegt darin, daß zwischen den beiden Stäben in einer von den physikalischen Gegebenheiten abhängigen Geometrie Lücken für Steuerstab-Führungsrohre vorhanden sein müssen, die im Brennelement verbleiben. Die Anordnung der Stäbe nach Fig. 3 bietet nun die Möglichkeit, im Rahmen der Rastergeometrie des Brennelementes kleinere oder grössere Mengen von Stäben, je nach der vorgefundenen Situation, auszuschieben. Dazu sind die Grundplatte 1 und die Führungsplatte 17 an einem Koordinaten-Transportsystem 33, 34 (Fig. 2 und 4) befestigt, das es erlaubt, die Druckvorrichtung in die jeweils gewünschte Position zum Brennelement zu transportieren.

Der Druckstangen 18 können an ihren dem Brennelement zugewandten Enden halbkugelförmig oder trichterförmig so ausgebildet sein, daß sie die Stopfen der Brennstäbe mindestens teilweise umschließen, so daß ein seitliches Wegrutschen der Brennstäbe unter der Druckeinwirkung vermieden ist.

Aus der in Fig. 4 dargestellten teilweise geschnittenen Seitenansicht der Druckvorrichtung ist zu erkennen, wie die Druckleisten 11, 12, 13, 14 mit den Bügeln 7, 8, 9, 10 und den Näherungsschaltern 32 gestaltet sind. Die Näherungsschalter 32 sprechen an, sobald die ihnen zugeordneten, in Kugelbüchsen 35 geführten Schaltleisten 27, 28, 29, 30 durch eine der Druckstangen 18 angehalten werden und in den Wirkungsbereich des Schalters 32 gelangen.

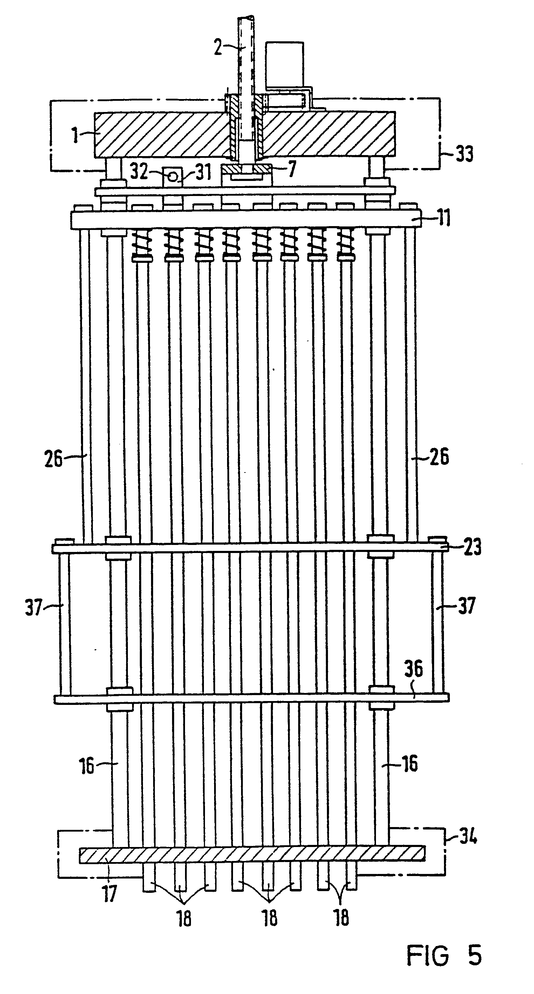

In Fig. 5 ist in einem weiteren Längsschnitt eine Variante der Druckvorrichtung nach Fig. 2 dargestellt, bei der eine zustätzliche Halterungsplatte (z. B 36), auf Führungsstangen 16 gleitend, über Schubstangen 37, die in ihrer Funktion den Schubstangen 26 entsprechen, axialverschiebbar an der zugeordneten Führungsplatte (z. B. 23) gehaltert ist. Diese zusätzlichen Halterungsplatten entsprechen in ihrer Funktion den bereits beschriebenen Halterungsplatten 22, 23, 24, 25. Falls es sich als notwendig erweisen sollte können in weiteren Ebenen Halterungsplatten in entsprechender Weise angeordnet werden. Es ist natürlich auch möglich, die Schubstangen 26 der Halterungsplatten 22, 23, 24, 25 rohrförmig auszubilden und die Schubstangen 37 in diesen Rohren teleskopartig anzuordnen, so daß sich beide Schubstangen nach dem Aufsetzen der unteren Halterungsplatten auf die Führungsplatte 17 teleskopartig zusammenschieben.

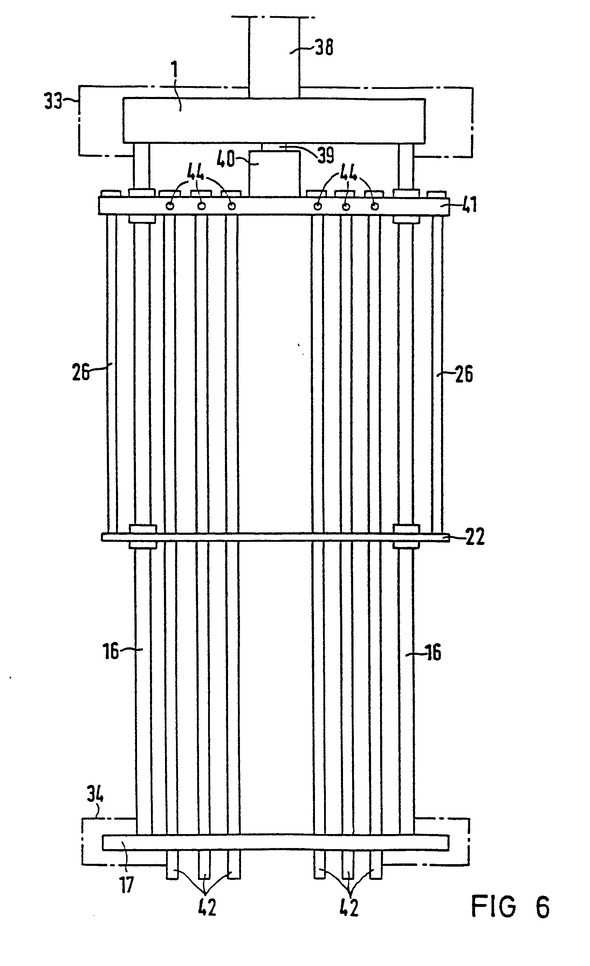

Eine weitere Ausführungsform der Druckvorrichtung ist als schnittbildliche Vorderansicht, deren Schnittebene derjenigen der Fig. 5 entspricht, in Fig. 6 dargestellt. Dabei sind die konstruktiv und funktional gleichen Bauelemente mit den gleichen Bezugszeichen wie im vorigen Ausführungsbeispiel versehen.

Das Funktionsprinzip unterscheidet sich dadurch von demjenigen des vorbeschriebenen Ausführungsbeispieles, daß anstelle eines Spindelantriebes für die Druckstangen ein hydraulischer Antrieb mit dem Zylinder 38 und dem Kolben 39 benutzt ist. Dieser ist mit dem Bügel 40 der Druckleiste 41 fest verbunden. Außerdem sind die Druckstangen 42 nicht gegen Federdruck um den Schalthub zur Betätigung eines Näherungsschalters axial verschiebbar an der Druckleiste 41 gehaltert, sondern mit Hilfe von Scherstiften 44 an dieser befestigt. Dies hat zur Folge, daß beim Verklemmen eines der Brennstäbe in den Abstandshaltern des Brennelementes der Scherstift der betreffenden Druckstange abschert, so daß die Stange in dieser Position verharrt, der Antrieb selbst aber nicht unterbrochen wird. Der Kolben 39 führt also die übrigen Druckstangen bis in ihre untere Endposition. Der hängengebliebene Brennstab kann dann mit einem speziellen Ziehwerkzeug entfernt und gesondert behandelt werden.

Bei dem in Fig. 6 dargestellten Ausführungsbeispiel fehlen im Vergleich zur Ausführungsform nach Fig. 5 die beiden mittleren Druckstangen, weil diese beim Stehenbleiben den darüber angeordneten Kolben 39 mit dem Bügel 40 blockiren würden. Eine mögliche Ausweichlösung könnte darin bestehen, die beiden mittleren Druckstangen nicht mit Scherstiften an der Druckleiste 41 zu befestigen, sondern, entsprechend dem vorigen Ausführungsbeispiel, gegen Federdruck um einen solchen Hub axial gleitend zu lagern, daß sie im Fall der Blockade durch Betätigen eines Näherungsschalters den Hydraulikantrieb unterbrechen. Als weitere Alternativlösung könnte der Kolben 39 mit dem Bügel 40 um einen entsprechenden Betrag senkrecht zur Richtung der Druckstangenreihe versetzt angeordnet werden. Ferner wäre es möglich, die Führungsstangen 16 selbst als Kolben parallel arbeitender Hydraulikzylinder auszubilden, diese mit der Druckleiste 41 fest zu verbinden und in Kugelbüchsen gleitend an der Grundplatte 1 und der Führungsplatte 17 zu lagern, wobei diese mit separaten Distanzhaltern aneinander zu befestigen wären.

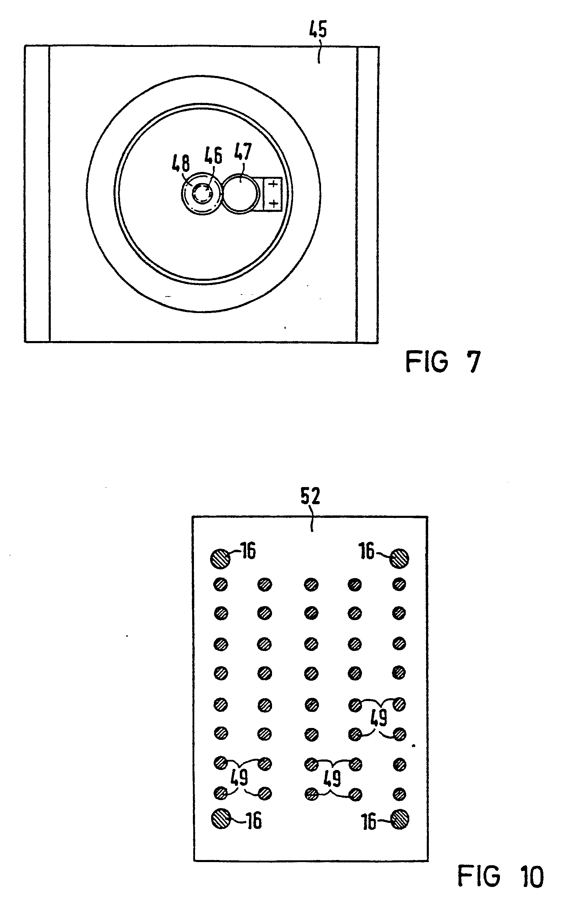

Es wurde bereits erwähnt, daß die Druckvorrichtung erfindungsgemäß auch so gestaltet werden kann, daß die Brennstäbe gruppenweise aus dem Brennelement auszuschieben sind. Eine so gestaltete Druckvorrichtung ist in den Figuren 7 bis 10 dargestellt. Gemäß der Draufsicht nach Fig. 7 ist auf einer Grundplatte 45 ein einziger Spindelantrieb mit der Spindel 46, dem Antriebsmotor 47 und der Getriebemutter 48 angeordnet.

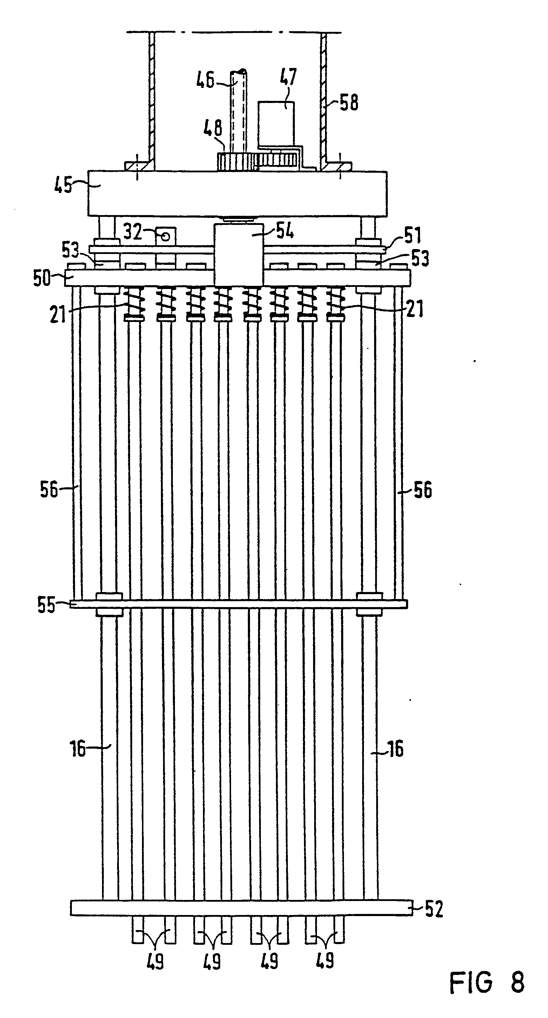

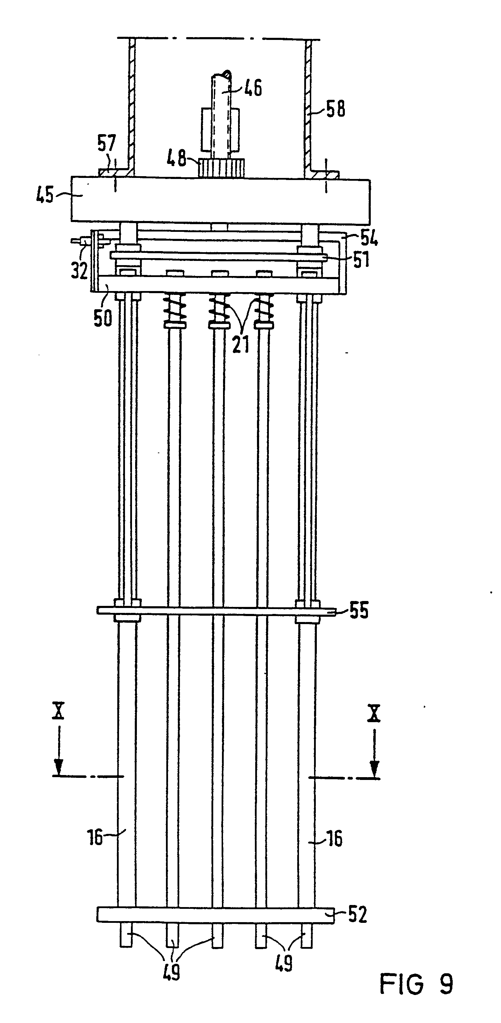

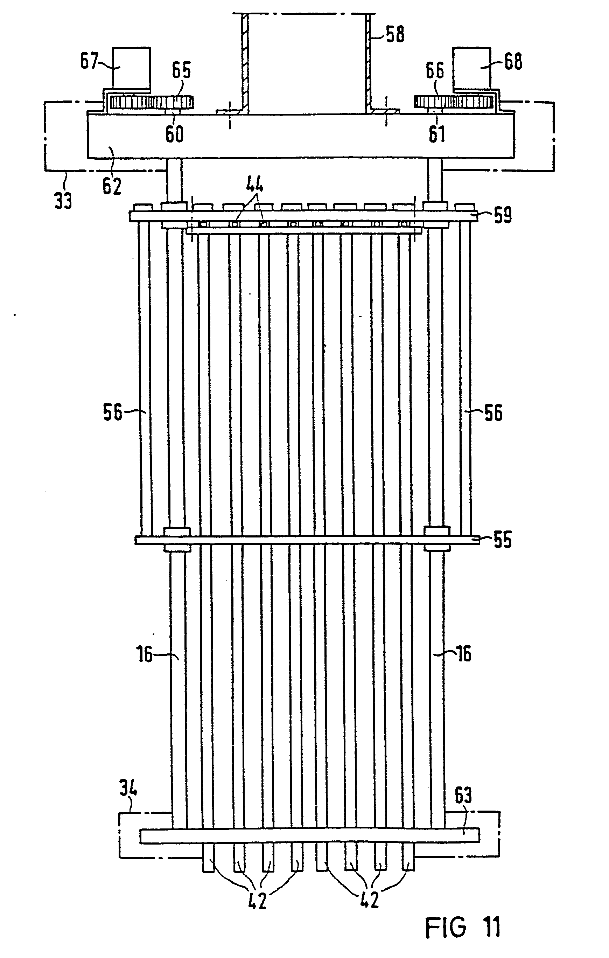

Aus der Querschnittsdarstellung in Fig. 10 ist zu erkennen, daß die Druckstangen 49 als komplette Gruppe in einer der Rastergeometrie des Brennelementes entsprechenden Anordnung an einer einzigen Druckplatte 50 befestigt sind (Fig. 9). Die Art der Befestigung ist in Fig. 8 dargestellt und entspricht derjenigen nach Fig. 2. Die Druckstangen 49 sind also in entsprechenden Bohrungen der Druckplatte 50 gegen Federdruck um einen gewissen Axialhub verschiebbar angeordnet. Anstelle einer Schaltleiste zur Betätigung des Näherungsschalters 32 wie in Fig. 2 ist im vorliegenden Fall gemäß der Darstellung in Fig. 9 eine Schaltplatte 51 vorgesehen, die im Falle des Verklemmens eines Brennstabes durch die betreffende Druckstange angehalten wird und dabei den Näherungsschalter 32 betätigt, der den Antriebsmotor 47 unterbricht. Die Grundplatte 45 ist über vier Führungsstangen 16 mit der Führungsplatte 52 fest verbunden (Fig. 8). Beide befinden sich wiederum in einem solchen Abstand voneinander, daß die der Länge der auszuschiebenden Brennstäbe entsprechende Hubbewegung der Druckplatte 50 ausgeführt werden kann. Die Führungsplatte 52 besitzt mit denjenigen der Druckplatte 50 deckungsgleiche Bohrungen, in denen die Druckstangen 49 axial verschiebbar gelagert sind. Die Druckplatte 50 gleitet in Kugelbüchsen 53 auf den Führungsstangen 16 und wird über einen Bügel 54 von der Spindel 46 betätigt. Dazu ist die Spindel 46 am Bügel 54 befestigt. Um ein Durchbiegen der Druckstangen 49 zu vermeiden, ist wiederum zwischen der Druckplatte 50 und der Führungsplatte 52 eine Halterungsplatte 55 angeordnet, die mit Hilfe von vier Schubstangen 56 an der Druckplatte 50 gehaltert ist. Die Schubstangen 56 sind mit der Halterungsplatte 55 fest und mit der Druckplatte 50 axial gleitend verbunden. Ihre Funktion ist die gleiche wie bereits in Fig. 2 beschrieben.

Ferner ist anstelle eines Koordinaten-Transportsystems eine mit einem Flansch 57 auf der Grundplatte 45 befestigte rohrförmige Halterung 58 benutzt. Sie hat den Vorteil, daß sie sowohl hinsichtlich der technischen Ausführung als auch der Handhabung einfacher ist, als das vorerwähnte Koordinaten-Transportsystem. Dieser Vorteil kommt vor allem dann zum Tragen, wenn die Brennstäbe wie im vorliegenden Ausführungsbeispiel, gruppenweise ausgeschoben werden können, so daß die Position der Druckvorrichtung gegenüber dem Brennelement nicht so häufig geändert werden muß, wie beispielsweise beim reihenweisen Ausschieben der Brennstäbe. Die Druckvorrichtung kann über die Rohrhalterung an das oberhalb des Reaktor-Druckbehälters üblicherweise vorhandene Hebezeug gehängt und mit dessen Hilfe in die gewünschte Position zum Brennelement befördert werden.

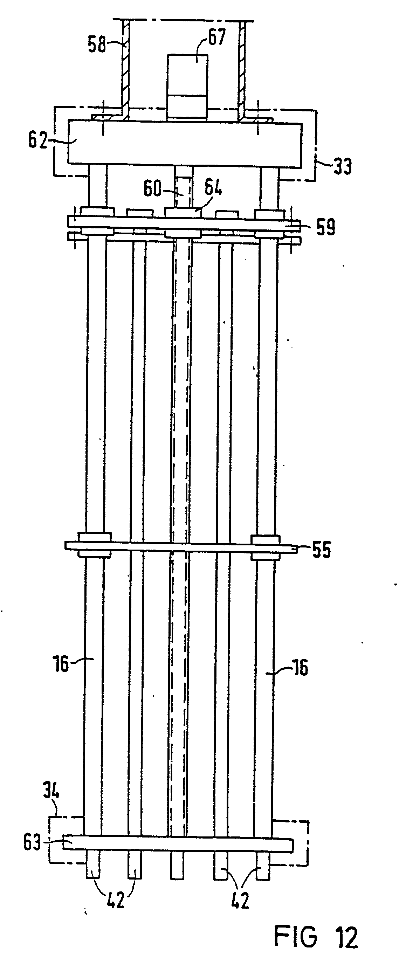

Eine besonders günstige Raumausnutzung ergibt sich nach einer weiteren Ausführungsvariante gemäß den Figuren 11 und 12 durch eine andere Gestaltung des Spindelantriebs. Dabei sind nicht die auf der Grundplatte gelagerten Getriebemuttern vom Antriebsmotor bewegt, sondern die Gewindespindeln selbst.

Dazu sind die beiden, die Druckplatte 59 vertikal verschiebenden Gewindespindeln 60, 61 in der Grundplatte 62 sowie in der Führungsplatte 63 drehbar und an der Druckplatte 59 in je einer mit dieser fest verbundenen Gewindemutter 64 drehbar gelagert. Jede Gewindespindel besitzt an ihren aus der Grundplatte 62 herausragenden antriebsseitig Enden eine Friktionsscheibe 65, 66, die von je einem Antriebsmotor 67, 68 oder — unter Verwendung entsprechender Übertragungsmittel — von einem einzigen Antriebsmotor in Drehung versetzt werden. Im Gegensatz zu den vorbeschriebenen Beispielen unterliegen dabei die Gewindespindeln selbst keiner Vertikalbewegung. Nur die Druckplatte 59 führt zusammen mit den Druckstangen 42 die gewünschte vertikale Hubbewegung aus. Dadurch reduziert sich die erforderliche Bauhöhe der Druckvorrichtung auf etwa die Hälfte derjenigen der vorbeschriebenen Ausführungsbeispiele. Die Führungsplatte 63 besitzt wiederum mit denjenigen der Halterungsplatte 55 und der Druckplatte 59 deckungsgleiche Bohrungen für die Druckstangen 42 und die Führungsstangen 16. Die Halterung der Druckstangen 42 an der Druckplatte 59 entspricht funktionell derjenigen nach Fig. 6. Die übrigen mit den vorigen Ausführungsbeispielen funktionsgleichen Konstruktionselemente sind mit den gleichen Bezugszeichen versehen.

**Patentansprüche**

1. Druckvorrichtung zum Ausschieben von Brennstäben, die in Abstandshaltern eines Kernreaktor-Brennelementes achsparallel zueinander angeordnet sind, dadurch gekennzeichnet, daß zum gleichzeitigen Ausschieben einer Anzahl von Brennstäben, in Sonderheit aller Brennstäbe die Druckvorrichtung mit einer entsprechenden Anzahl von axial verschiebbaren Druckstangen (18, 42, 49) ausgerüstet ist, die im gleichen geometrischen Teilungsmaß angeordnet sind wie die auszuschiebenden Brennstäbe im Brennelement, wobei die Druckstangen an ihren den Brennstäben abgewandten Enden an Druckleisten bzw. -platten (11, 12, 13, 14, 41, 50) gehaltert sind, und in einem der Hubhöhe entsprechenden axialen Abstand von der betreffenden Druckleiste bzw. -platte (11, 12, 13, 14, 41, 50) eine Führungsplatte (17, 52) mit dem Querschnitt der Druckstangen entsprechenden Bohrungen zur gleitenden achsparallelen Führung der Druckstangen angeordnet ist, und die Druckleisten bzw. -platten (11, 12, 13, 14, 41, 50) an Führungsstangen (16) axial beweglich gehaltert sind, die einerseits mit einer Grundplatte (1, 45) und andererseits mit der Führungsplatte (17, 52) in einem der Hubhöhe der Druckstangen entsprechenden Abstand verbunden sind, und daß an der Grundplatte (1, 45) befestigte Antriebsmittel (2 bis 6 ; 38, 39, 46, 47, 48) zum Verschieben der Druckleisten bzw. -platten (11, 12, 13, 14, 41, 50) gegenüber der Grundplatte um den zum Ausschieben der Brennstäbe aus den Abstandshaltern der Brennelemente mit Hilfe der Druckstangen erforderlichen Hub vorhanden sind, daß jede Druckstange mit Blockierungs-Sicherungsmitteln (21, 27, 28, 29, 30, 31, 32, 44, 51) versehen ist, die bei Überschreiten eines vorgebbaren Druckes ansprechen und eine Weiterbewegung der betreffenden Druckstange verhindern und daß die Grundplatte (1, 45) und die Führungsplatte (17, 52) an Halterungsmitteln befestigt sind.

2. Druckvorrichtung nach Anspruch 1, dadurch gekennzeichnet, daß zwischen den Druckleisten bzw. -platten (11, 12, 13, 14, 41, 50, 59) und der Führungsplatte (17, 52, 63) mindestens eine, mit der betreffenden Druckleiste bzw. -platte über Schubstangen (26, 37, 56) axial verschiebbar verbundene Halterungsplatte (22, 23, 24, 25, 36, 55) vorhanden ist, welche dem Querschnitt der Druckstangen entsprechende Bohrungen für die achsparallele Führung der Druckstangen besitzt.

3. Druckvorrichtung nach Anspruch 1 oder 2, dadurch gekennzeichnet, daß als Antriebsvorrichtung von Elektromotoren (4, 47) mittels drehbar auf der Grundplatte (1, 45) gelagerten Gewindemuttern (3, 48) angetriebene, durch die Grundplatte (1, 45) hindurchgeführte Gewindespindeln (2, 46) benutzt sind.

4. Druckvorrichtung nach Anspruch 1 oder 2, dadurch gekennzeichnet, daß als Antriebsmittel von Elektromotoren (67, 68) unmittelbar oder über Friktionsmittel (65, 66) angetriebene, durch die Grundplatte (62), die Druckplatte (59) und die Führungsplatte (63) hindurchgeführte und in der Grundplatte (62) und in der Führungsplatte (63) in Drehlagern und in der Druckplatte (59) in je einer, mit dieser fest verbundenen Gewindemutter (64) gelagerte Gewindespindeln (60, 61) benutzt sind.

5. Druckvorrichtung nach Anspruch 1 bis 4, dadurch gekennzeichnet, daß zur Blockierungs-Sicherung jede Druckstange (18, 49) um einen solchen Hub gegen den Druck je einer Feder (21) axial verschiebbar an der zugeordneten Druckleiste bzw. -platte (11, 12, 13, 14, 50) gehaltert ist, daß sie am Ende der Hubbewegung einen Schalter (32) betätigt, der die jeweilige Antriebsvorrichtung stillsetzt.

6. Druckvorrichtung nach Anspruch 1 bis 4, dadurch gekennzeichnet, daß zur Blockierungs-Sicherung jede Druckstange (42) mittels eines Scherstiftes (44) fest mit der zugeordneten Druckleiste (41) verbunden ist.

7. Druckvorrichtung nach Anspruch 1 bis 6, dadurch gekennzeichnet, daß als Halterungsmittel ein in zwei Koordinaten bewegbares Transportsystem (33, 34) benutzt ist.

8. Druckvorrichtung nach Anspruch 1 bis 6, dadurch gekennzeichnet, daß als Halterungsmittel eine zentral an der Grundplatte (45, 62) befestigte Rohrhalterung (58) benutzt ist.

**Claims**

1. Thrusting device for pushing-out fuel rods wich are arranged axis-parallel to one another in spacing holders of a nuclear reactor fuel element, characterised in that for the simultaneous pushing-out of a number of fuel rods, and in a special case all the fuel rods, the thrusting device is provided with a corresponding number of axially displaceable pressure rods (18, 42, 49), which are arranged in the same geometrical spacing degree as the fuel rods in the fuel element that are to be pushed-out, whereby the pressure rods are supported on pressure strips or pressure plates (11, 12, 13, 14, 41, 50) at their ends remote from the fuel rods, and at an axial distance from the relevant pressure strip or pressure plate (11, 12, 13, 14, 41, 50) corresponding to the length of stroke, a guide plate (17, 52) is arranged with bores corresponding to the cross section of the pressure rods, for the axis-parallel sliding guiding of the pressure rods, and the pressure strips or pressure plates (11, 12, 13, 14, 41, 50) are mounted in axially movable manner on guide rods (16), which are connected on the one hand to a base plate (1, 45) and on the other hand to the guide plate (17, 52) at a distance corresponding to the length of stroke of the pressure rods, and in that drive means (2 to 6 ; 38, 39, 46, 47, 48) are secured on the base plate (1, 45) for shifting the pressure strips or pressure plates (11, 12, 13, 14, 41, 50) with respect to the base plate by the stroke necessary for pushing-out the fuel rods from the spacing holders of the fuel elements with the aid of the pressure rods, in that each pressure rod is provided with blocking safety means (21, 27, 28, 29, 30, 31, 32, 44, 51) which react when a predetermined pressure is exceeded, and prevent a further movement of the relevant pressure rod, and in that the base plate (1, 45) and the guide plate (17, 52) are secured on mounting means.

2. Thrusting device according to claim 1, characterised in that between the pressure strips or pressure plates (11, 12, 13, 14, 41, 50, 59) and the guide plate (17, 52, 63) there is at least one mounting plate (22, 23, 24, 25, 36, 55) connected in axially displaceable manner to the relevant pressure strip or pressure plate by means of connecting rods (26, 37, 56), which mounting plate has bores corresponding to the cross section of the pressure rods, for the axis-parallel guiding of the pressure rods.

3. Thrusting device according to claim 1 or 2, characterised in that as a drive device there are used threaded spindles (2, 46) guided through the base plate (1, 45) and driven by electric motors (4, 47) by means of threaded nuts (3, 48) mounted rotatably on the base plate (1, 45).

4. Thrusting device according to claim 1 or 2, characterised in that as drive means there are used threaded spindles (60, 61) driven directly by electric motors (67, 68) or by friction means (65, 66), guided through the base plate (62), the pressure plate (59) and the guide plate (63), and mounted in the base plate (62) and in the guide plate (63) in pivot bearings, and in the pressure plate (59) in respective threaded nuts (64) firmly connected to this.

5. Thrusting device according to claim 1 to 4, characterised in that for the blocking-safety means each pressure rod (18, 49) is mounted to be axially displaceable on the associated pressure strip or pressure plate (11, 12, 13, 14, 50), by such a stroke against the pressure of a respective spring (21) that at the end of the stroke it actuates a switch (32) which brings to a halt the respective drive device.

6. Thrusting device according to claim 1 to 4, characterised in that for the blocking-safety means each pressure rod (42) is firmly connected by means of a shear pin (44) to the associated pressure strip (41).

7. Thrusting device according to claim 1 to 6, characterised in that as mounting means there is used a transport system (33, 34) movable in two co-ordinates.

8. Thrusting device according to claim 1 to 6, characterised in that as mounting means there is used a tubular support (58) secured centrally on the base plate (45, 62).

**Revendications**

1. Appareil de pression pour expulser des barreaux de combustible disposés avec leurs axes en parallèle dans des entretoises d'un élément combustible de réacteur nucléaire, caractérisé en ce que, pour l'expulsion simultanée d'un certain nombre de barreaux de combustible, en particulier de tous les barreaux, l'appareil de pression est équipé d'un nombre correspondant de barres de poussée (18, 42, 49) axialement déplaçables, qui sont disposées suivant le même écartement géométrique que les barreaux à expulser dans l'élément combustible, les barres de poussée étant maintenues, par leurs extrémités éloignées des barreaux de combustible, à des traverses ou des plaques de poussée (11, 12, 13, 14, 41, 50), une plaque-guide (17, 52) étant disposée à une distance axiale de la traverse ou de la plaque de poussée (11, 12, 13, 14, 41, 50) concernée correspondant à la hauteur de déplacement nécessaire, plaque-guide qui présente des trous correspondant à la section droite des barres de poussée pour le guidage de celles-ci pendant leur coulissement parallèlement à l'axe, et les traverses ou plaques de poussée (11, 12, 13, 14, 41, 50) étant supportées axialement mobiles sur des barres-guides (16) reliées d'un côté à une plaque de base (1, 45) et de l'autre côté à la plaque-guide (17, 52), à une distance correspondant à la hauteur de déplacement des barres de poussée, que l'appareil comprend des moyens de commande (2 à 6 ; 38, 39, 46, 47, 48) fixés à la plaque de base (1, 45) pour déplacer les traverses ou les plaques de poussée (11, 12, 13, 14, 41, 50), par rapport à la plaque de base, sur la distance nécessaire pour pousser les barreaux de combustible hors des entretoises des éléments combustibles à l'aide des barres de poussée, que chaque barre de poussée est munie de moyens (21, 27, 28, 29, 30, 31, 32, 44, 51) de sûreté en cas de blocage qui, en cas de dépassement d'une pression pouvant être préfixée, entrent en action et empêchent la poursuite du mouvement de la barre de poussée concernée, et que la plaque de base (1, 45) et la plaque-guide (17, 52) sont fixées à des moyens de support.

2. Appareil selon la revendication 1, caractérisé en ce qu'il comprend, entre les traverses ou les plaques de poussée (11, 12, 13, 14, 41, 50, 59) et la plaque-guide (17, 52, 63), au moins une plaque de support (22, 23, 24, 25, 36, 55) qui est reliée à la traverse ou à la plaque de poussée concernée par des barres coulissantes (26, 37, 56), de manière qu'elle puisse être déplacée axialement, plaque de support qui possède des trous, correspondant à la section droite des barres de poussée, pour le guidage de ces barres parallèlement à l'axe.

3. Appareil selon la revendication 1 ou 2, caractérisé en ce qu'il comprend, en tant que dispositif de commande, des broches filetées (2, 46) qui sont commandées par des moteurs électriques (4, 47) par l'intermédiaire d'écrous (3, 48) montés rotatifs sur la plaque de base (1, 45), broches qui passent à travers la plaque de base (1, 45).

4. Appareil selon la revendication 1 ou 2, caractérisé en ce qu'il comprend, en tant que moyens de commande, des broches filetées (60, 61) qui sont commandées directement ou par l'intermédiaire de moyens de friction (65, 66) par des moteurs électriques (67, 68), broches filetées qui traversent la plaque de base (62), la plaque de poussée (59) et la plaque-guide (63) et sont montées par des paliers à rotule dans la plaque de base (62) et dans la plaque-guide (63), tandis qu'elles sont montées chacune, dans la plaque de poussée (59), dans un écrou (64) relié rigidement à cette plaque de poussée.

5. Appareil selon une des revendications 1 à 4, caractérisé en ce que, pour la sécurité en cas de blocage, chaque barre de poussée (18, 49) est maintenue sur la traverse ou la plaque de poussée (11, 12, 13, 14, 50) coordonnée de façon à pouvoir être déplacée axialement sur une telle distance, contre la pression d'un ressort (21) pour chaque barre, qu'à la fin de ce déplacement, la barre de poussée actionne un interrupteur (32) qui arrête le dispositif de commande concerné.

6. Appareil selon une des revendications 1 à 4, caractérisé en ce que, pour la sécurité en cas de blocage, chaque barre de poussée (42) est reliée fixe à la traverse de poussée (41) coordonnée au moyen d'une goupille de cisaillement (44).

7. Appareil selon une des revendications 1 à 6, caractérisé en ce qu'il utilise, en tant que moyen de support, un système de transport (33, 34) déplaçable suivant deux coordonnées.

8. Appareil selon une des revendications 1 à 6, caractérisé en ce qu'il utilise, en tant que moyen de support, un support tubulaire (58) fixé de façon centrée à la plaque de base (45, 62).

FIG 1

FIG 3

FIG 2

FIG 4

FIG 5

FIG 6

FIG 7

FIG 10

FIG 8

FIG 9

FIG 11

FIG 12